# EUROPEAN PATENT APPLICATION

(11) **EP 4 804 453 A1**
(43) Date of publication of application: **09.09.2026**
(21) Application number: 26160241.1
(22) Date of filing: 24.02.2026
(51) Int. Cl.: H04L 9/00, G06F 13/14

(54) **DIRECT MEMORY ACCESS CIRCUIT WITH MASKING CONVERSIONS**

(30) Priority: 03.03.2025 FR 2502110
(71) Applicant: Commissariat à l'Energie Atomique et aux Energies Alternatives, 75015 Paris (FR)
(72) Inventor: DI MATTEO, Stefano, 38054 GRENOBLE CEDEX 09 (FR); VALEA, Emanuele, 38054 GRENOBLE CEDEX 09 (FR)
(74) Representative: Cabinet Beaumont

(57) **Abstract**

The present disclosure relates to a direct memory access circuit comprising at least one data path (Ch1, Ch2, Ch3, Chs) coupling an input port of a master interface to an output port of the master interface. The at least one data path comprises a first data path (Ch1). The first data path (Ch1) has a pipelined structure. The first data path (Ch1) comprises a first circuit (200, 200B) configured to apply one among a Boolean to arithmetic masking conversion and an arithmetic to Boolean masking conversion to data propagated by the first data path (Ch1).

## Description

### Technical field

The present disclosure relates generally to electronic integrated circuits, and, more particularly, to circuits for Post-Quantum Cryptography (PQC).

### Background art

Post-Quantum Cryptographic algorithms refer to algorithms that are designed to be secure against attacks from quantum computers, which are able to break the mathematical security of classical cryptographic algorithms.

It is known to implement such algorithms in hardware. Such hardware implementations of PQC algorithms must be secure against Side-Channel Attacks (SCA). SCAs are a type of attacks that exploit indirect information leaked from the hardware implementation of an algorithm rather than directly targeting the algorithm. For example, such attacks rely on physical observations of the timing, power consumption, electromagnetic emissions to gather information about the operation of the hardware, to help the attackers deducing secrets such as cryptographic keys.

In order to make hardware implementation of PQC algorithms secure against SCAs, masking is used as a countermeasure that guarantee security against SCAs. Depending on the masking protection order d, with d an integer superior or equal to one, data to be masked are splits (or represented) by d+1 parts, also named "shares", with the introduction of randomness.

Two mains masking schemes are used. The Boolean masking and the arithmetic masking.

In Boolean masking, the sensitive or secret data to be protected is masked through a XOR (exclusive or) operator, for example with the following formula: $x = x 0 XOR x 1 , with$ x the secret data, x0 the result of the XOR operation between the secret data and a random value, and x1 the random value, x0 and x1 being the two parts the secret data x is split into.

In arithmetic masking, the sensitive or secret data to be protected is masked through an arithmetic operator such as an arithmetic addition, for example with the following formula: $x = \left(x0+x1\right) mod q ,$ with x the secret data, x1 a random value, x0 the result of the subtraction modulo q between the secret data x and the random value x1, mod the modulus operator and q a strictly positive integer that depend on the algorithm, x0 and x1 being the two parts the secret data x is split into.

However, depending on the operations of the PQC algorithms, the data that are used as input by an operation should be masked according to the Boolean masking or to the arithmetic masking.

Thus, there is a need for performing Boolean to arithmetic masking conversion, or said in other words Boolean masking to arithmetic masking conversions, that are, for example, labelled B2Aq, with q the value of the integer in the arithmetic masking formula [Math 2], and for performing arithmetic to Boolean masking conversion, or said in other words arithmetic masking to Boolean masking conversions, that are, for example, labelled A2Bq, with q the value of the integer in the arithmetic masking formula [Math 2].

### Summary of Invention

There is a need to address all or some of the drawbacks of known B2Aq conversions and/or A2Bq conversions, in particular when such conversions are implemented in hardware.

One embodiment addresses all or some of the drawbacks of known B2Aq conversions and/or A2Bq conversions, in particular when such conversions are implemented in hardware.

One embodiment provides an electronic system for implementing a post-quantum cryptographic algorithm, the system comprising:
a communication bus;
a direct memory access circuit;
a computing and processing unit, such as a microprocessor,
connected to the bus; and
two peripherals connected to the bus each by a slave interface.
The direct memory access circuit comprises:
a slave interface configured to receive programming data for programming the direct memory access circuit;
a master interface connected to the bus and comprising an input port configured to read input data for the direct access memory circuit from a source memory, and an output port configured to write output data of the direct access memory circuit to a destination memory; and
at least one data path coupling the input port to the output port, the at least one data path has a pipelined structure that alternates combinatory stages and memorization registers, and comprises a first data path, the first data path comprises a first circuit configured to apply one among a Boolean to arithmetic masking conversion and an arithmetic to Boolean masking conversion to data propagated by the first data path. The computing and processing unit is configured to provide programming data to the slave interface of the direct memory access circuit, the programming data configuring a data transfer by the direct access memory circuit from one of the two peripherals to another of the two peripherals. The two peripherals are two hardware accelerators each implementing a cryptographic operation, or are a memory and a hardware accelerator implementing a cryptographic operation. One of the two peripheral corresponds to the source memory and the other of the two peripheral corresponds to the destination memory.

According to one embodiment:
the first circuit is configured to apply a Boolean to arithmetic masking conversion to the data propagated by the first data path;
the at least one data path comprises a second data path; and
the second data path comprises a second circuit configured to apply an arithmetic to Boolean masking conversion to data propagated by the second data path.

According to one embodiment, the first circuit comprises a succession of adder circuits of the Kogge-Stone Adder type.

According to one embodiment, the second circuit comprises a succession of adder circuits of the Kogge-Stone Adder type.

According to one embodiment, each adder circuit has a pipelined structure comprising alternated combinatory stages and memorization registers.

According to one embodiment:
the at least one data path comprises a third data path;
the third data path comprises a third circuit; and
the third circuit is configured, when data are propagated by the third data path, to receive data from the input port,
and to output intermediate data that are values sampled from a centered binomial distribution.

According to one embodiment:
the first circuit is shared between the first data path and the third data path;
the third data path is configured so that, when data are propagated by the third data path, the first circuit receives the intermediate data and provides data to the output port; and
the first data path is configured so that, when data are propagated by the first data path, the first circuit receives data from the input port and provides data to the output port.

According to one embodiment:
the second data path comprises a fourth circuit configured, when data are propagated by the second data path, to receive data from the input port, to apply a combinational masked compression to the received data, and to output compressed data; and
the second circuit is configured, when data are propagated by the second data path, to receive the compressed data and to provide data to the output port.

According to one embodiment:
the at least one data path comprises a supplementary data path;
the supplementary data path is configured, when data are propagated by the supplementary data path, to apply no Boolean to arithmetic masking conversion and no arithmetic to Boolean masking conversion.

### Brief description of drawings

The foregoing features and advantages, as well as others, will be described in detail in the following description of specific embodiments given by way of illustration and not limitation with reference to the accompanying drawings, in which:
Figure 1 is a reproduction of the Figure 3 of an article from Schneider et al;
Figure 2 illustrates an example of a direct memory access circuit according to one embodiment;
Figure 3 illustrates, with more details, an example of an embodiment of a hardware circuit of the direct memory access circuit of Figure 2;
Figure 4 illustrates another example of a direct memory access circuit according to one embodiment;
Figure 5 illustrates yet another example of a direct memory access circuit according to one embodiment;
Figure 6 illustrates yet another example of a direct memory access circuit according to one embodiment;
Figure 7 is a modified reproduction of the Figure 4 of an article from Fritzmann et al; and
Figure 8 illustrates an electronic system implementing a PQC algorithm, that comprises a direct memory access circuit as described in relation with the other Figures.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail. In particular, the known PQC algorithms and the known hardware implementations of operations performed by these known algorithms have not been described in detail, the described embodiments and variants being compatible with these known hardware implementations.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 % or 10°, and preferably within 5 % or 5°.

Secure hardware or software implementations of masking conversions rely on an operation or primitive named secure addition and generally labelled SecAdd.

In software implementations, this primitive is slow and difficult to make secure.

In the article "Arithmetic Addition over Boolean Masking: Toward First and Second-Order Resistance in Hardware" from Schneider et al, published in Applied Cryptography and Network Security: 13th International Conference, ACNS 2015, New York, June 2-5, Revised Selected Paper 13, Springer International Publishing, 2015, the authors of the article propose two hardware implementations of the primitive SecAdd.

A first one of these architectures is based on Ripple Carry Adder (RCA) and is not detailed here. This architecture targets low area and low performance.

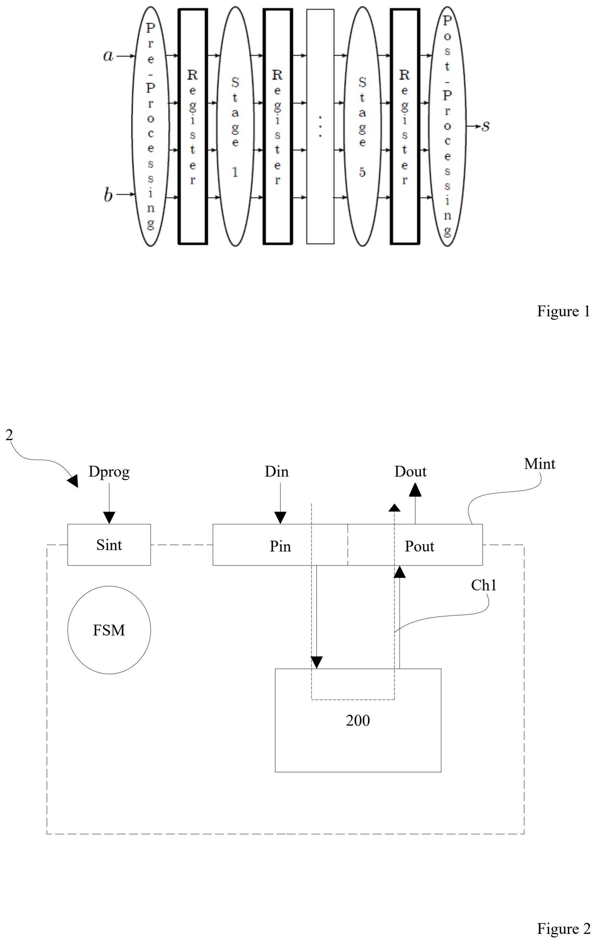

A second one of these architectures is based on Kogge-Stone Adder (KSA) and is illustrated by Figure 1.

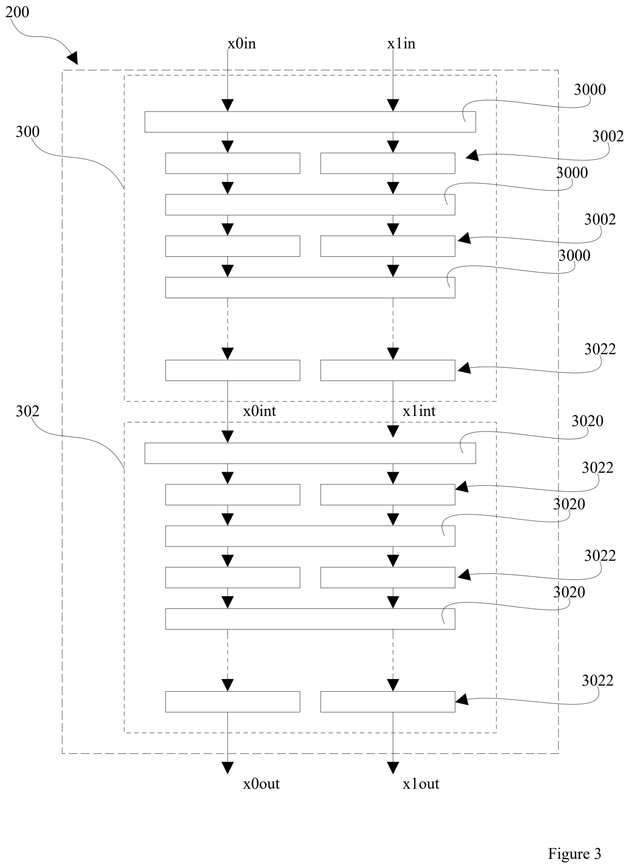

Figure 1 is a reproduction of Figure 3 of the above-mentioned article.

The circuit is configured to implement the SecAdd primitive. The adder of Figure 1 receives two inputs a and b, and produces an output s, which is the result of the addition of a and b. In practice, although not shown on Figure 1, the input a, respectively b, is split into two shares a_0 and a_1, respectively b_0 and b_1, and the output s is also divided into two shares s_0 and s_1.

The circuit has fully pipelined architecture that alternates combinatory stages (blocks "Pre-Processing", "Stage 1", "Stage 5" and "Post-Processing" on the Figure), with memorization stages implemented as registers (blocks "Register" on the Figure).

Thanks to the pipelined architecture, the adder of the Figure 1 has low latency.

The authors of the paper have demonstrated that having registers arranged between the combinational stages allow for the adder to have improved resistance against SCAs.

More detail about the different stages of the adder are given in Figure 1 of the above-mentioned paper and the description related to this Figure.

In the article "Masked accelerators and instruction set extensions for post-quantum cryptography" from Fritzmann et al, published in IARC Transaction on Cryptographic Harware and Embedded Systems in 2022, pages 414 to 460, the authors of the paper propose three algorithms that can be used to implement a B2Aq and a A2Bq masking conversions.

A first algorithm (referenced "Algorithm 8: SecAddq simplified" in the paper) allows to execute a secure addition modulo q by exploiting a succession of secure additions. This operation, named SecAddq, is expressed as follows:

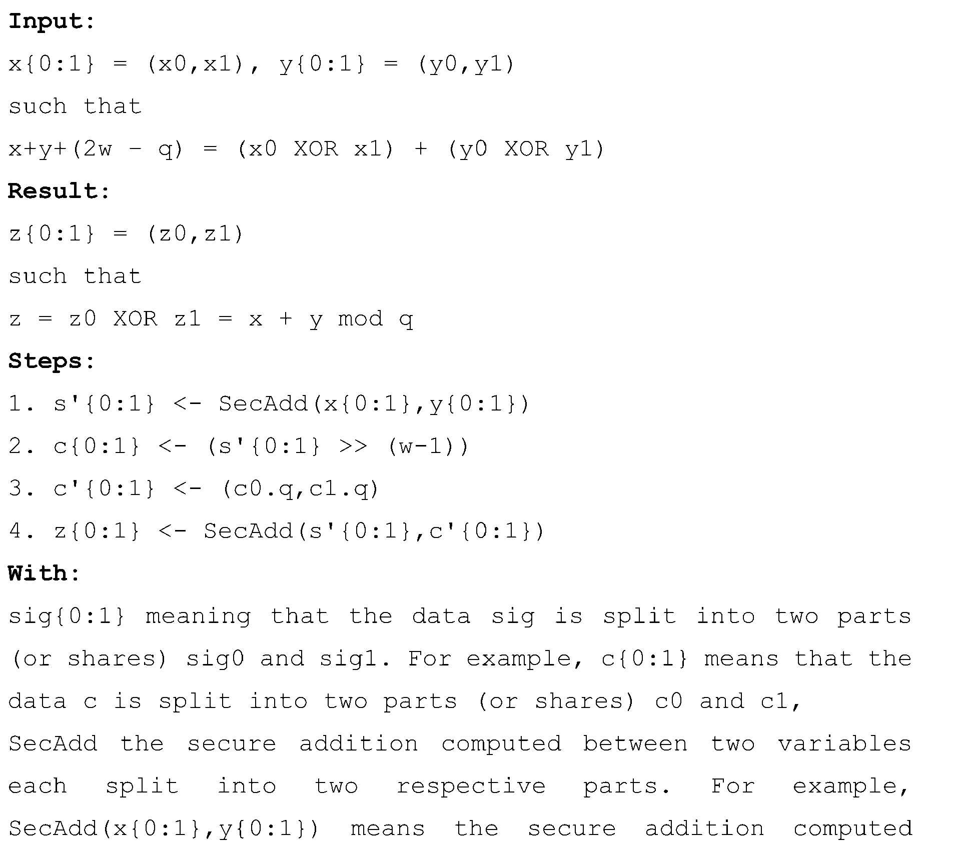

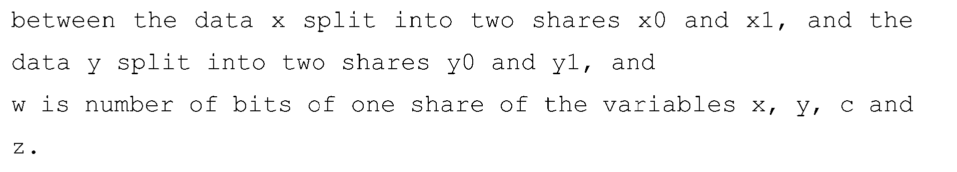

Based on the SecAddq operation defined by the first algorithm, the authors of the paper propose a second algorithm (referenced "Algorithm 12: B2Aq" in the paper) allowing to implement the B2Aq conversion. This B2Aq conversion is expressed as follow:

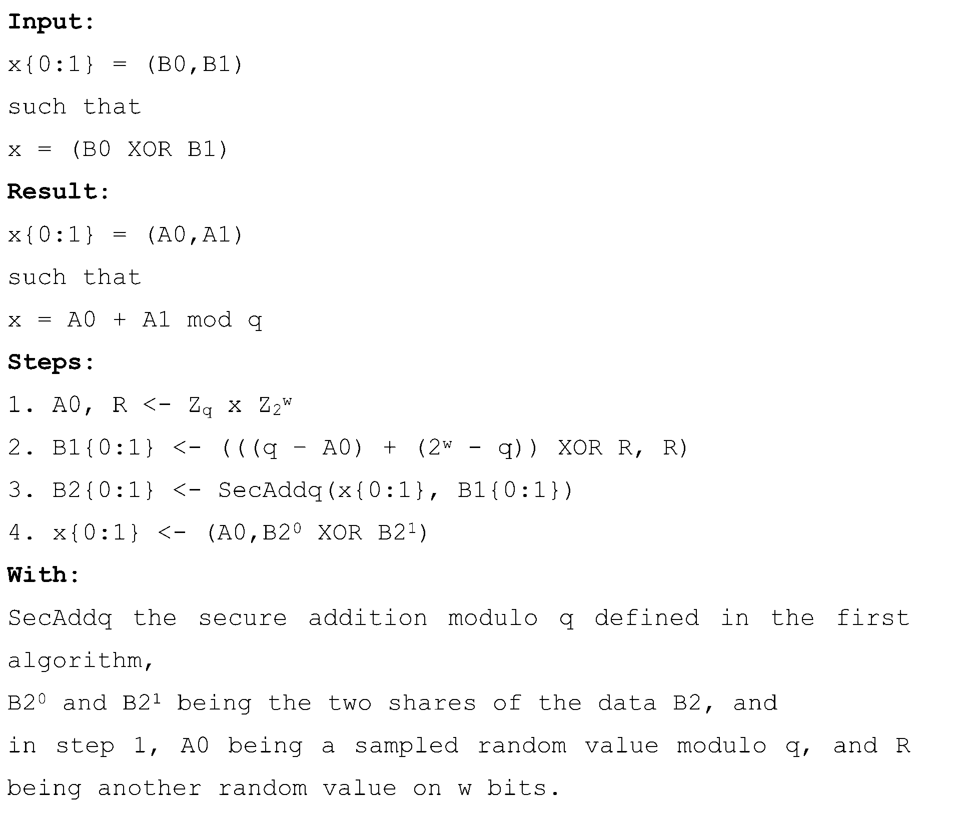

Still based on the SecAddq operation defined by the first algorithm, the authors of the paper propose a third algorithm (referenced "Algorithm 10: A2Bq" in the paper) allowing to implement the A2Bq conversion. This A2Bq conversion is expressed as follow:

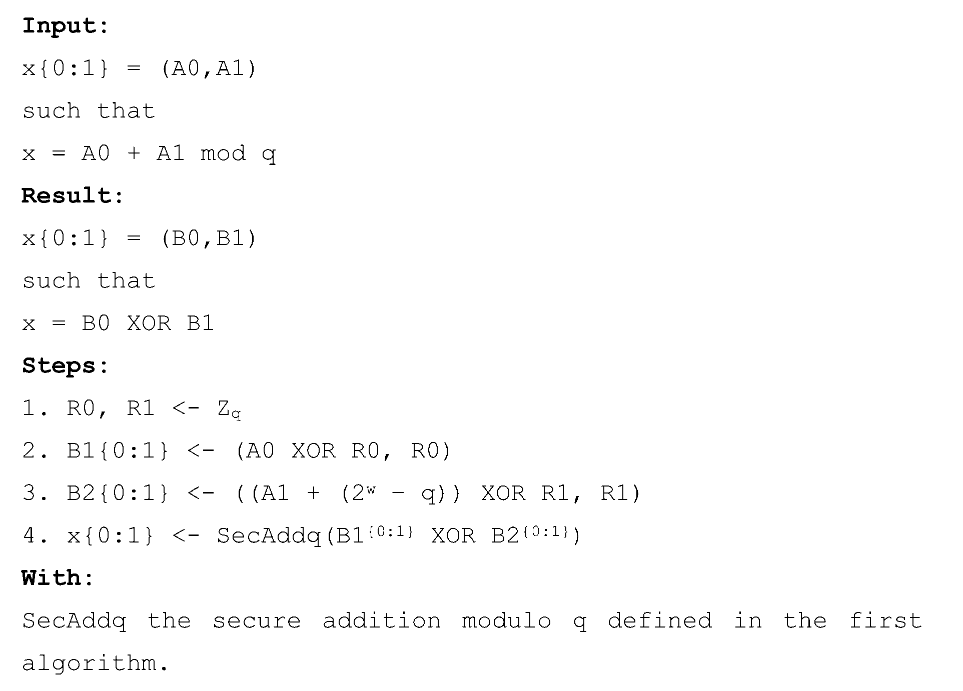

The three above algorithms or operations are better defined in the paper.

In the paper, the secure addition SecAdd is implemented by a secure adder of the KSA type having an architecture similar to the one presented in the Figure 1 of the present disclosure. This KSA architecture is integrated in the pipeline stage of a 32 bits RISC-V processor that is shown on the drawing 12 of the paper, this drawing 12 being not reproduced in the present disclosure.

Further, in this paper, except for the secure addition SecAdd (steps 1 and 4 of the SecAddq operation), the steps of the algorithms are implemented in software. Such an implementation of the B2Aq masking conversion and A2Bq masking conversion results in a long execution time.

More generally, masking conversion are expensive in terms of execution time, and this is especially true in the case of a software implementation. Further, when a PQC algorithm have specific operations that are implemented thought dedicated hardware accelerators, as a masking is implemented on the data used by these PQC operation hardware accelerators, B2Aq or A2Bq masking conversions have to be performed on the data when these data are transferred from a memory to a corresponding PQC operation hardware accelerator, or from a PQC operation hardware accelerator to a memory. A masking conversion B2Aq or A2Bq can be implemented by a masking conversion hardware accelerator. However, when data transfers are managed by a processor, this result in the processor being occupied to manage these data transfers.

For example, the PQC algorithm called ML-KEM is considered. A hardware implementation of the ML-KEm algorithm is considered, the hardware implementation comprising:
a hardware accelerator called Keccak for implementing hash function,
a hardware accelerator called NTT accelerator for performing polynomial multiplication using the Number Theoretic Transform (NTT) technic.
In order to implement data masking in the ML-KEM algorithm, the data provided to the Keccak accelerator are masked with Boolean masking whereas the data provided to NTT accelerator are masked with Arithmetic masking. Thus, when data are transferred from the Keccak accelerator to a memory, and then from the memory to the NTT accelerator, a B2Aq conversion must be performed on the data stored in the memory. A hardware accelerator dedicated to the B2Aq masking conversion could be designed. Then, the data are transferred from the Keccak accelerator to the memory, from the memory to hardware accelerator performing the B2Aq conversion before sending the data back to the memory, and from the memory to the NTT accelerator. However, all these data transfers are controlled by the processor, which results in the processor not available for other operation.

It is here proposed a hardware accelerator that is able, to manage data transfers between two peripherals as known direct memory access (DMA) circuits do, and to further perform at least one operation among B2Aq masking conversion and A2Bq masking conversion when the data are transferred by this hardware accelerator. The two peripherals may be two hardware accelerators each implementing a cryptographic operation, or may be a memory and a hardware accelerator implementing a cryptographic operation.

The proposed circuit is called secure DMA. An advantage of such a secure DMA is that, once a data transfer by the secure DMA is programmed by programming the secure DMA with a processor, the data transfer and the masking conversion operation(s) are performed by the secure DMA without any intervention of the processor.

Figure 2 illustrates an example of a secure DMA access circuit 2 according to one embodiment. Circuit 2 is delimited by dotted lines in Figure 2.

The circuit 2 comprises a slave interface Sint, represented on Figure 2 in the form of a block. The interface Sint is configured to receive programming data Dprog, for example, from a processor or CPU ("Computing and Processing Unit" or "Central Processing Unit"). The programming data allow to program the circuit 2. Said in other words, the programming data allow to configure the data transfer operation that the circuit 2 has to performed.

For example, the programming data comprise indication of the source and the destination of the data transfer, and/or the size of the data to be transferred, and/or the quantity of data to be transferred.

The slave interface is configured to be connected to a communication infrastructure commonly called bus. The slave interface Sint does not initiate the transfer of the programming data on the bus to the interface Sint.

For example, the circuit 2 comprises a programmable finite state machine FSM that is programmed by the data Dprog in order to manage the data transfers implemented by the circuit 2.

The circuit 2 further comprises a master interface Mint, represented on Figure 2 under the form of a block. The master interface Mint comprises an input port Pin, and an output port Pout.

The port Pin is configured to read input data Din of the circuit 2 from a source memory. For example, the source memory is an output internal memory of a hardware accelerator implementing a cryptographic operation, such an output internal memory being, for example, configured to store output data of the accelerator before the data are read from the accelerator. As an alternative example, the source memory is a memory for storing data, for example data that were read from an output of a hardware accelerator.

The port Pout is configured to write output data Dout of the circuit 2 to a destination memory. For example, the destination memory is an input internal memory of a hardware accelerator implementing a cryptographic operation, such an input internal memory being, for example, configured to store input data of the accelerator before the data are processed by the accelerator. As an alternative example, the destination memory is a memory for storing data, for example data that will be later provided to an input of a hardware accelerator.

The master interface Mint is configured to be connected to the same communication infrastructure (e.g. the bus) as the slave interface Sint. The master interface Mint initiates the transfer of the data on the bus from a source memory to the port Pin and from the port Pout to the destination memory.

The circuit 2 comprises at least one data path or channel, coupling the input port Pin to the output port Pout. In the example of Figure 2, the circuit 2 comprises only one data path Ch1 represented in dotted lines.

Although not detailed in Figure 2, the data path Ch1 of the circuit 2 has a pipelined structure that alternates combinatory stages and memory or register stages. Preferably, in other examples where the circuit 2 comprises a plurality of data paths each coupling the port Pin to the port Pout, each data path of the plurality of data path has a pipelined structure.

The data path Ch1 comprises a circuit 200. As the circuit 200 is part of the data path Ch1, the circuit 200 has a pipelined structure.

The circuit 200 is configured to apply one among a B2Aq masking conversion and a A2Bq masking conversion to the data that are propagated by the data path Ch1 from the port Pin to the port Pout and via the circuit 200. For example, in Figure 2, the circuit 200 is configured to apply a Boolean to arithmetic masking conversion. However, in an alternative example, the circuit 200 is configured to apply an arithmetic to Boolean masking conversion.

Thus, when data are transferred by the circuit 2 using the data path Ch1, the data are received by the port Pin, the circuit 200 processes (converts) data coming from the port Pin and output processed (converted) data that are sent to port Pout, and the data are outputted from the circuit 2 via the output port Pout.

Figure 3 illustrates, with more details, an example of an embodiment of the hardware circuit 200 of the direct memory access circuit 2 of Figure 2. In the example of Figure 3, d is equal to one, and the data are thus split into two parts referenced x0in and x1in in the example of Figure 3.

In the example of Figure 3, the circuit 200 is configured to apply a Boolean to arithmetic masking conversion to the data. However, the structure of the circuit 200 could be the identical to the one described below in relation with Figure 3 in an alternative example where the circuit 200 is configured to apply an arithmetic to Boolean conversion to the data.

The circuit 200 receives, in the example of Figure 3, the data x1in, x0in. In this example, the data x0in, x1in are masked with a Boolean masking. In the example of Figure 3 where d is equal to one, the data x0in and x1in are the d+1 parts of the secret data masked with the Boolean masking. Said in other words, the circuit 200 receives an input data xin split into two shares x0in and x1in.

The circuit 200 outputs data x0out, x1out that are, in this example, masked with an arithmetic masking. In the example of Figure 3 where d is equal to one, the data x0out and x1out are the d+1 parts of the secret data masked with the arithmetic masking. Said in other words, the circuit 200 provides an output data xout split into two shares x0out and x1out.

The circuit 200 comprises a succession of adder circuits of the KSA type. For example, in Figure 3, the circuit 200 comprises a succession of two adder circuits 300 and 302 of the KSA type.

The received data x0in, x1in are provided to a first adder 300 the succession of adder circuits. The adder 300 comprises, as previously described in relation with Figure 1, combinatory stages 3000 alternated with register stages 3002. The adder 300 thus has a pipelined structure. The adder 300 outputs intermediate data split into d+1 parts, thus into two parts x0int and x1int in the example of Figure 3.

For example, the adder circuit 300 at least implements the secure addition SecAdd of the step 1 of the first algorithm previously described.

The data x0int, x1int outputted by the first adder 300 are provided to the input of the next adder circuit of the succession of adder circuits, thus to the adder circuit 302 in the example of Figure 3. The adder 302 comprises, as previously described in relation with Figure 1, combinatory stages 3020 alternated with register stages 3022. The adder 3020 thus has a pipelined structure. The adder 302 outputs the output data of the circuit 200, these data being split into d+1 parts, thus into two parts x0out and x1out in the example of Figure 3.

For example, the adder circuit 302 at least implements the secure addition SecAdd of the step 4 of the first algorithm previously described.

For example, the adder circuits 300, 302 of the circuit 200 are configured to implement the SecAddq operation of the first algorithm previously presented.

More particularly, in the example of Figure 3 where the circuit 200 implement a Boolean to arithmetic masking conversion, the adder circuits 300, 302 of the circuit 200 are configured to implements the steps of the second algorithm previously presented. For example, the two SecAdd operations are implemented by the respective adder circuits 300 and 302, in order to implement the SecAddq operation of the step 3 of the second algorithm, and at least some of the combinatory stages 3000 and 3020 of the adders 300 and 302 are configured so that the two adders 300 and 302 implements the four steps of the Boolean to arithmetic conversion according to the second algorithm.

In an alternative example where the circuit 200 implement an arithmetic to Boolean masking conversion, the adder circuits 300, 302 of the circuit 200 are configured to implements the steps of the third algorithm previously presented. For example, the two SecAdd operations are implemented by the respective adder circuits 300 and 302, in order to implement the SecAddq operation of the step 4 of the third algorithm, and at least some of the combinatory stages 3000 and 3020 of the adders 300 and 302 are configured so that the two adders 300 and 302 implements the four steps of the arithmetic to Boolean conversion according to the third algorithm.

During a data transfer, the circuit 200, and, in particular, the fact that circuit 200 comprises a succession of adder circuits of the KSA type each having a pipelined structure with alternated combinatory stages and register stages, allow to process a big amount of data in a streaming fashion, and to avoid or at least reduce the bubbles and stalls in the pipeline.

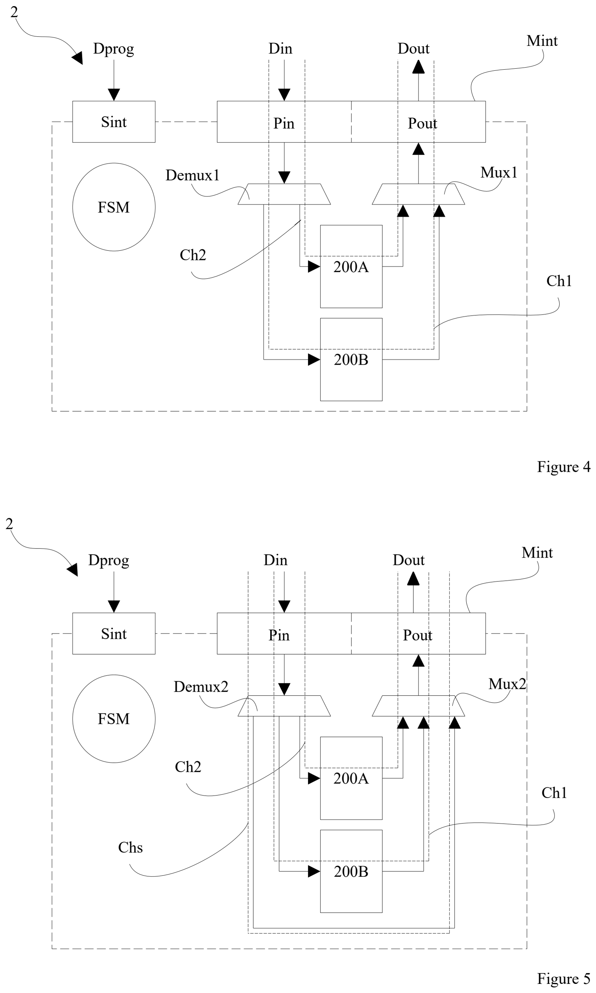

Figure 4 illustrates another example of the direct memory access circuit 2 according to one embodiment. The circuit 2 of Figure 4 has a lot of elements in common with the circuit 2 of Figure 2, and only the differences between these two circuits 2 are here detailed. Thus, unless specified otherwise, all that has been described for the circuit 2 of Figure 2 applies to the circuit 2 of Figure 4.

The circuit 2 of Figure 4 differs from the circuit 2 of Figure 2 in that, in Figure 4, the circuit 2 comprises more than one data path (or channel) coupling the input port Pin to the output port Pout. More particularly, in the example of Figure 4, the circuit 2 comprises the data path Ch1 and a further data path Ch2, these two data paths being represented by corresponding dotted lines in Figure 4.

In Figure 4, the circuit 200 of data path Ch1 is referenced 200B and is configured to apply a Boolean to arithmetic masking conversion to the data propagated by the data path Ch1, or, said in other words, to the data transferred from port Pin to port Pout via the data path Ch1.

In Figure 4, the data path Ch2 comprises a circuit 200A configured to apply an arithmetic to Boolean masking conversion to the data propagated by the data path Ch2, or, said in other words, to the data transferred from port Pin to port Pout via the data path Ch2.

The circuit 200A has, for example, a structure similar to the one of the circuit 200B, for example a structure similar to the one described in relation with Figure 3.

For example, the circuit 2 of Figure 4 comprises circuits for selecting one of the plurality of data paths Ch1 and Ch2 of the circuit 2, for example based on programming data Dprog received by the circuit 2. Thus, depending on the configuration of the circuit 2, for example controlled by the programming data Dprog, the circuit 2 selectively applies a Boolean to arithmetic masking conversion or an arithmetic to Boolean masking conversion to the data transferred by the circuit 2 between a source memory and a destination memory.

For example, in the example of Figure 4, the circuits for selecting one of the data paths Ch1 and Ch2 comprise a circuit Demux1 configured to selectively couple the port Pin to the input of circuit 200A or to the input of circuit 200B. For example, in the example of Figure 4, the circuits for selecting one of the data paths Ch1 and Ch2 comprise a circuit Mux1 configured to selectively couple the output of circuit 200A or the output of circuit 200B to the port Pout. For example, the circuits Demux1 and Mux1 are controlled based on the programming data Dprog, for example via the circuit FSM.

Figure 5 illustrates yet another example of the direct memory access circuit 2 according to one embodiment. The circuit 2 of Figure 5 has a lot of elements in common with the circuit 2 of Figure 4, and only the differences between these two circuits 2 are here detailed. Thus, unless specified otherwise, all that has been described for the circuit 2 of Figures 2 and 4 applies to the circuit 2 of Figure 5.

The circuit 2 of Figure 5 differs from the circuit 2 of Figure 4 in that, in Figure 5, the circuit 2 comprises a supplementary data path (or channel) Chs coupling the input port Pin to the output port Pout. More particularly, in the example of Figure 5, the circuit 2 comprises the data paths Ch1 and Ch2, and the supplementary data path Chs, these three data paths being represented by corresponding dotted lines in Figure 5.

In Figure 5, the circuit 200 of data path Ch1 is referenced 200B and is configured to apply a Boolean to arithmetic masking conversion to the data propagated by the data path Ch1, and the data path Ch2 comprises a circuit 200A configured to apply an arithmetic to Boolean masking conversion to the data propagated by the data path Ch2.

The data path Chs is configured to not apply any Boolean to arithmetic masking conversion or arithmetic to Boolean masking conversion. Preferably, the data path Chs does not apply any operation related to a Post-Quantum Cryptographic algorithm to the data propagated from the input port Pin to the output port Pout by this channel Chs. Said in other words, the data path Chs, for example, only has the function of transferring data, for example when the circuit 2 is configured to only transfer data between a source memory to a destination memory as usual direct access memory circuits do.

For example, the circuit 2 of Figure 5 comprises circuits for selecting one of the plurality of data paths Ch1, Ch2 and Chs of the circuit 2, for example based on programming data Dprog received by the circuit 2. Thus, depending on the configuration of the circuit 2, for example controlled by the programming data Dprog, the circuit 2 selectively applies a Boolean to arithmetic masking conversion (data path Ch1) to the data transferred by the circuit 2 between a source memory and a destination memory, or an arithmetic to Boolean masking conversion (Ch2) to the data transferred by the circuit 2 between a source memory and a destination memory, or only a transfers data between a source memory and a destination memory.

For example, in the example of Figure 5, the circuits for selecting one of the data paths Ch1, Ch2 and Chs comprise a circuit Demux2 configured to selectively couple the port Pin to the input of circuit 200A or to the input of circuit 200B, or to a circuit Mux2. For example, in the example of Figure 4, the circuits for selecting one the data paths Ch1, Ch2 and Chs comprise the circuit Mux2 that is configured to selectively couple the output of circuit 200A or the output of circuit 200B the port Pout, or the circuit Demux2 to the output port Pout. For example, the circuits Demux2 and Mux2 are controlled based on the programming data Dprog, for example via the circuit FSM.

Although the supplementary channel Chs has been described in relation with an example of the circuit 2 that further comprises more than one data paths, for example the data paths Ch1 and Ch2 in the example of Figure, such a supplementary data path Chs may be provided in the circuit 2 of Figure 2.

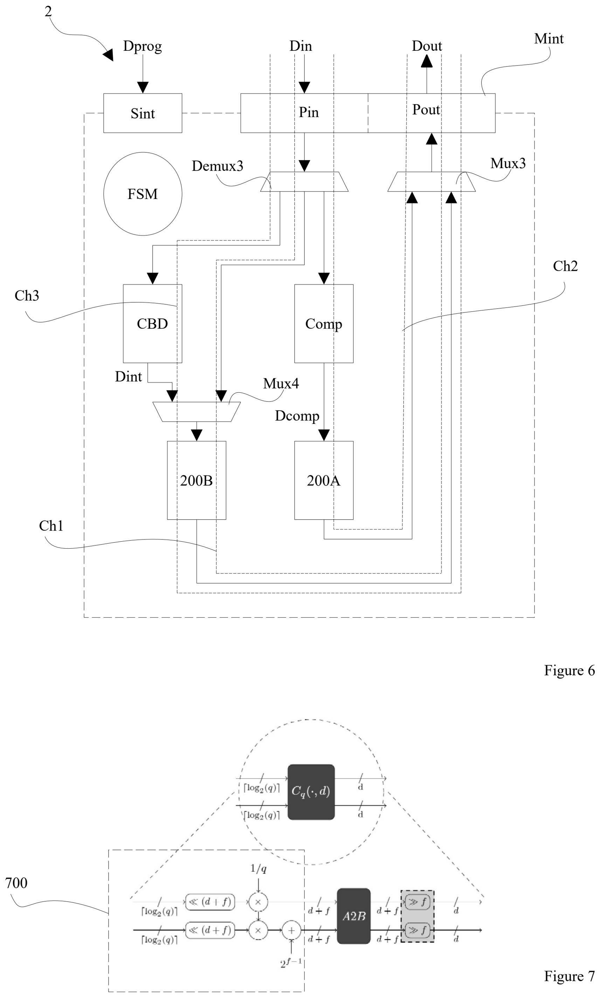

Figure 6 illustrates yet another example of the direct memory access circuit 2 according to one embodiment. The circuit 2 of Figure 6 has a lot of elements in common with the circuit 2 of Figure 4, and only the differences between these two circuits 2 are here detailed. Thus, unless specified otherwise, all that has been described for the circuit 2 of Figure 4 applies to the circuit 2 of Figure 6.

The circuit 2 of Figure 6 differs from the circuit 2 of Figure 4 in that, in Figure 6, the circuit 2 comprises a third data path (or channel) Ch3 coupling the input port Pin to the output port Pout. More particularly, in the example of Figure 6, the circuit 2 comprises three data paths Ch1, Ch2 and Ch3, these three data paths being represented by corresponding dotted lines in Figure 5.

In Figure 6, the data path Ch1 comprises the circuit 200B configured to apply a Boolean to arithmetic masking conversion to the data propagated by the data path Ch1, and the data path Ch2 comprises the circuit 200A configured to apply an arithmetic to Boolean masking conversion to the data propagated by the data path Ch2.

The data path Ch3 comprises a circuit CBD. The circuit CBD is configured, when data propagate in the data path Ch3, to receive data from the input port Pin, and to output intermediate data Dint that are values sampled from a centered binomial distribution, for example a binomial distribution with a null average and a parameter param equal, for example, to two or three, with the parameter param that defines the number of independent Bernoulli trials used to generate the distribution. Said in other words, the circuit CBD generates small and random error values following a centered binomial distribution.

As an example, the circuit CBD is using masked data. In this case, secure additions SecAdd are implemented in the circuit CBD, for example with adder circuits of the KSA type as previously described.

As an example, the data Dint outputted by the circuit CBD are data that are masked with a Boolean masking.

Furthermore, the circuit 2 of Figure 6 differs from the circuit 2 of Figure 4 in that, in Figure 6, the circuit 200B is shared between the data path Ch1 and the data path Ch3. More particularly, when data are propagated by the data path Ch3 between the input port Pin and the output port Pout, the propagated data are first provided to the circuit CBD that outputs the data Dint, and the data Dint are then provided to the shared circuit 200B, the data outputted by the circuit 200B being then provided to the output port Pout. However, when data are propagated by the data path Ch1 between the input port Pin and the output port Pout, the shared circuit 200B directly receives data from the input port Pin, and outputs data that are provided to the output Pout.

Furthermore, the circuit 2 of Figure 6 differs from the circuit 2 of Figure 4 in that, in Figure 6, the data path Ch2 comprises a circuit Comp configured, when data are propagated by the data path Ch2 between the input port Pin and the output port, to receive data from the input port, to apply a combinational masked compression to the received data, and to output compressed data Dcomp. More particularly, when data are propagated by the data path Ch2 between the input port Pin and the output port Pout, the propagated data are first provided to the circuit Comp that outputs the compressed data Dcomp, and the data Dcomp are then provided to the circuit 200A, the data outputted by the circuit 200A being then provided to the output port Pout.

To summarize:
- when data are propagated by the data path Ch1, the data only pass by the circuit 200B. Thus, only a Boolean to arithmetic masking is applied to the data propagated by the data path Ch1. The input data of the data path Ch1 are masked in the Boolean domain, and the output data of the data path Ch1 are masked in the arithmetic domain;
- when data are propagated by the data path Ch2, the data first pass by the circuit Comp and then by the circuit 200A. Thus, a compression is first applied to the data propagated by the data path Ch2, and then an arithmetic to Boolean masking conversion is applied to the data resulting from the compression. The input data of the data path Ch1 are masked in the arithmetic domain, and the output data of the data path Ch1 are masked in the Boolean domain; and
- when data are propagated by the data path Ch3, the data Din represents the input of the CBD block and follows an uniform distribution, the CBD block outputs the intermediate data Dint that corresponds to sampled values of the input Din, the data Dint follows a binomial distribution. Then a Boolean to arithmetic masking conversion is applied, by the circuit 200B, to the data Dint outputted from the CBD circuit. The input data of the data path Ch3 are masked in the Boolean domain, and the output data of the data path Ch3 are masked in the arithmetic domain.

For example, the circuit 2 of Figure 6 comprises circuits for selecting one of the plurality of data paths Ch1, Ch2 and Ch3 of the circuit 2, for example based on programming data Dprog received by the circuit 2. Thus, depending on the configuration of the circuit 2, for example controlled by the programming data Dprog, the circuit 2 transfers data from a source memory to a destination memory using the selected data path among the data paths Ch1, Ch2 and Ch3.

For example, in the example of Figure 6, the circuits for selecting one the data paths Ch1, Ch2 and Ch3 comprises a circuit Demux3 configured to selectively couple the port Pin to the input of circuit 200A or to an input of a circuit Mux4, a further input of the circuit Mux4 being coupled, preferably connected, to the output of the circuit CBD. For example, in the example of Figure 6, the circuits for selecting one the data paths Ch1, Ch2 and Ch3 comprises the circuit Mux4 that is configured to selectively couple the output of circuit CBD or the input port Pin (via the circuit Demux3) to the input of the circuit 200B. For example, in the example of Figure 6, the circuits for selecting one the data paths Ch1, Ch2 and Ch3 comprises a circuit Mux3 that is configured to selectively couple the output of circuit 200B or the output of the circuit 200A to the port Pout.

For example, the circuit Comp is configured to implements operations on data so that the data path Ch2 implements the "masked compression" function that is described in relation with Figure 4 of the article of Fritzmann et al.

Figure 7 is a modified reproduction of the Figure 4 of the article of Fritzmann et al. More particularly, the Figure 7 is a reproduction of the Figure 4 of the article in which a rectangle 700 in dotted lines has been added.

For example, the circuit Comp of the circuit 2 of Figure 6 is configured to implements the operations of the "masked compression" function that are included in the rectangle 700. Those skilled in the art are capable to understand the "masked compression" function by referring to the article of Fritzmann et al, and in particular to the description made of the Figure 4 of this paper.

As it can been seen on Figure 7, in the "masked compression" function, an arithmetic to Boolean masking conversion A2Bq is then applied the data resulting from the operations included in the rectangle 700. For example, this making conversion operation is performed by the circuit 200A in the circuit 2 of Figure 6, when data are propagated by the data path Ch2.

It follows that the circuit 2 of Figure 6 can be advantageously used for implementing the PQC algorithm CRYSTALS-Kyber. Indeed, as it is described in the report "First-order masked Kyber on ARM Cortex-M4" from Heinz et al published in 2022 in Cryptology ePrint Archive, and which describes a software implementation of the CRYSTAL-Kyber algorithm with d equal to 1, this algorithm uses:
- a first function "masked poly from msg", which is a B2Aq conversion,
- a second function "masked CBD" that first generates small and random values following a centered binomial distribution, and then applies a B2Aq conversion to the Boolean data corresponding to the generated random values, and
- a third function "masked compression" that is described in the article of Fritzmann et al.

More particularly, the function "masked poly from msg" can be implemented in hardware with the circuit 2 of Figure 6 when the data path Ch1 is selected among the data paths Ch1, Ch2 and Ch3, the function "masked CBD" can be implemented in hardware with the circuit 2 of Figure 6 when the data path Ch3 is selected among the data paths Ch1, Ch2 and Ch3, and the function "masked compression" can be implemented in hardware with the circuit 2 of Figure 6 when the data path Ch3 is selected among the data paths Ch1, Ch2 and Ch3.

Although the example of circuit 2 described in relation with Figure 6 is more particularly adapted to implement in hardware the three function of the PQC algorithm CRYSTAL-Kyber, those skilled in the art are capable of modifying the circuits 2 described in relation with Figures 2, 4, 5 and 6 so that the modified circuit 2 comprises at least one data path implementing in hardware at least one corresponding function of another PQC algorithm.

Although this is not the case in the example of Figure 6, in other examples not shown the circuit 2 of the Figure 6 may further comprises the supplementary data path Chs described in relation with the Figure 5.

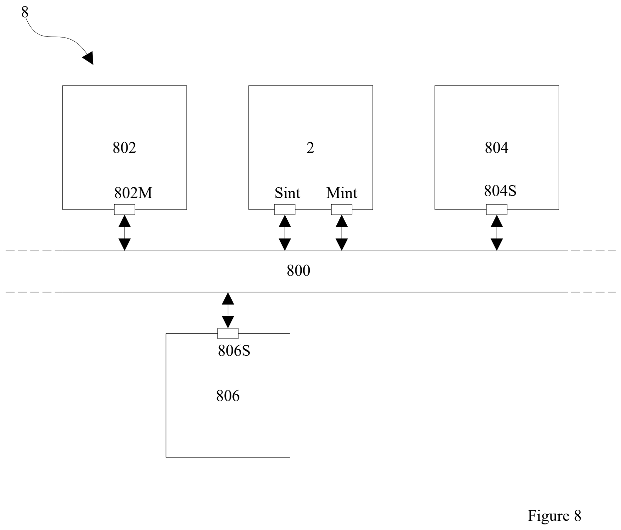

Figure 8 illustrates an electronic system 8 implementing a PQC algorithm.

The system 8 comprises the direct memory access circuit 2.

The system 8 further comprises a communication bus 800. The circuit 2 has its interfaces Sint and Mint coupled, preferably connected, to the bus 800.

The system 8 further comprises a computing and processing unit 802, for example a microprocessor 802. The circuit 802 is coupled, preferably connected, to the bus 800. Preferably, the circuit 802 is connected to the bus 800 by a master interface 802M that is configured to initiate a data transfer via the bus.

The circuit 802 is configured to provide the programming data Dprog to the slave interface Sint of the circuit 2, via the bus 800, in order to configure a data transfer by the circuit 2. For example, the master interface 802M is configured to initiate a transfer of programming data Dprog to the slave interface Sint of the circuit 2.

According to one embodiment, the system 8 comprises at least one hardware accelerator 804 configured to implement at least one step or operation of a post quantum cryptographic algorithm. In the example of Figure 8, the system 8 comprises only one accelerator circuit 804 although, in other examples not shown, the system 8 comprises more than one accelerator circuit 804.

The circuit 804 is coupled, preferably connected, to the bus 800. For example, the circuit 804 comprises a slave interface 804S connected to the bus 800. The slave interface 804S is for example configured to receive or to provide data of a data transfer that is not initiated by the interface 804S, but, for example, by the master interface Mint of circuit 2.

According to one embodiment, the circuit 804 is configured to implement an operation of a post quantum cryptographic algorithm on data provided by the circuit 2, for example on data outputted by the port Pout of the circuit 2 that are masked in the Boolean domain or in the arithmetic domain. Thus, the circuit 804 may be a destination memory for a data transfer implemented (or controlled) by the circuit 2, the data transfer preferably comprising at least one among a B2Aq and a A2Bq masking conversion performed by the circuit 2 during the data transfer. The circuit 804 may also be a source memory for a data transfer implemented (or controlled) by the circuit 2.

According to one embodiment, the system 8 further comprises a memory 806 for storing data, the memory being coupled, preferably connected, to the bus 800. For example, the memory 806 comprises a slave interface 806S connected to the bus 800. The slave interface 804S is for example configured to receive or to provide data of a data transfer that is not initiated by the interface 804S, but, for example, by the master interface Mint of circuit 2. The memory 806 could be a source memory for a data transfer implemented (or controlled) by the circuit 2, or a destination memory for a data transfer implemented (or controlled) by the circuit 2.

Various embodiments and variants have been described. Those skilled in the art will understand that certain features of these embodiments can be combined and other variants will readily occur to those skilled in the art. In particular, those skilled in the art are capable, based on the functional description made hereinabove, to adapt the described examples where d is equal to one to other examples where d is strictly superior to one. Moreover, the algorithms for the B2Aq conversion, for the A2Bq conversion, for the SecAdd operation, and for the SecAddq operation may be different to those detailed in the present disclosure. Further, those skilled in the art are capable to implement the circuit 200 with secure adder circuits having a pipelined structure but being not of the KSA type. Further, based on the functional description provided hereinabove, those skilled in the art are capable of implementing other examples of the circuit 2 where the circuit comprises at least one data path, the at least one data path comprising a circuit for applying one among a Boolean to arithmetic masking conversion and an arithmetic to Boolean masking conversion when data are propagated in this data path.

Finally, the practical implementation of the embodiments and variants described herein is within the capabilities of those skilled in the art based on the functional description provided hereinabove.

## Claims

1. An electronic system (8) for implementing a post-quantum cryptographic algorithm, the system comprising:
a communication bus (800);
a direct memory access circuit (2);
a computing and processing unit (802), such as a microprocessor, connected to the bus (800); and
two peripherals connected to the bus each by a slave interface,
wherein the direct memory access circuit comprises:
a slave interface (Sint) configured to receive programming data (Dprog) for programming the direct memory access circuit (2);
a master interface (Mint) connected to the bus and comprising an input port (Pin) configured to read input data (Din) for the direct access memory circuit from a source memory, and an output port (Pout) configured to write output data (Dout) of the direct access memory circuit to a destination memory; and
at least one data path (Ch1, Ch2, Ch3, Chs) coupling the input port to the output port, the at least one data path has a pipelined structure that alternates combinatory stages and memorization registers, and comprises a first data path (Ch1), the first data path (Ch1) comprises a first circuit (200, 200B) configured to apply one among a Boolean to arithmetic masking conversion and an arithmetic to Boolean masking conversion to data propagated by the first data path (Ch1),
wherein the computing and processing unit (802) is configured to provide programming data (Dprog) to the slave interface (Sint) of the direct memory access circuit (2), the programming data configuring a data transfer by the direct access memory circuit from one of the two peripherals to another of the two peripherals;
wherein the two peripherals are two hardware accelerators each implementing a cryptographic operation, or are a memory and a hardware accelerator implementing a cryptographic operation; and
wherein one of the two peripheral corresponds to the source memory and the other of the two peripheral corresponds to the destination memory.

2. The system of claim 1, wherein:
the first circuit (200, 200B) is configured to apply a Boolean to arithmetic masking conversion to the data propagated by the first data path (Ch1);
the at least one data path comprises a second data path (Ch2); and
the second data path (Ch2) comprises a second circuit (200A) configured to apply an arithmetic to Boolean masking conversion to data propagated by the second data path (Ch2).

3. The system of claim 1 or 2, wherein the first circuit (200, 200B) comprises a succession of adder circuits (300, 302) of the Kogge-Stone Adder type.

4. The system of claim 2, wherein the second circuit (200A) comprises a succession of adder circuits (300, 302) of the Kogge-Stone Adder type.

5. The system of claim 3 or 4, wherein each adder circuit (300, 302) has a pipelined structure comprising alternated combinatory stages (3000, 3020) and memorization registers (3002, 3022).

6. The system of claim 2, wherein:
the at least one data path comprises a third data path (Ch3);
the third data path (Ch3) comprises a third circuit (CBD); and
the third circuit (CBD) is configured, when data are propagated by the third data path (Ch3), to receive data from the input port (Pin), and to output intermediate data (Dint) that are values sampled from a centered binomial distribution.

7. The system of claim 6, wherein:
the first circuit (200B) is shared between the first data path (Ch1) and the third data path (Ch3);
the third data path (Ch3) is configured so that, when data are propagated by the third data path, the first circuit (200B) receives the intermediate data (Dint) and provides data to the output port (Pout); and
the first data path (Ch1) is configured so that, when data are propagated by the first data path (Ch1), the first circuit (200B) receives data from the input port (Pin) and provides data to the output port (Pout).

8. The system of claim 7, wherein:
the second data path (Ch2) comprises a fourth circuit (Comp) configured, when data are propagated by the second data path (Ch2), to receive data from the input port (Pin), to apply a combinational masked compression to the received data, and to output compressed data; and
the second circuit (200A) is configured, when data are propagated by the second data path (Ch2), to receive the compressed data and to provide data to the output port (Pout).

9. The system of any of claims 1 to 8, wherein:
the at least one data path comprises a supplementary data path (Chs);
the supplementary data path (Chs) is configured, when data are propagated by the supplementary data path (Chs), to apply no Boolean to arithmetic masking conversion and no arithmetic to Boolean masking conversion.
